Europäisches Patentamt

**European Patent Office**

**Office européen des brevets**

(11) Veröffentlichungsnummer: **0 592 889 A2**

(12) **EUROPÄISCHE PATENTANMELDUNG**

(21) Anmeldenummer: **93115862.0**

(22) Anmeldetag: **01.10.93**

(51) Int. Cl.⁵: **H02M 3/337**

(30) Priorität: **15.10.92 DE 4234769**

(43) Veröffentlichungstag der Anmeldung:
**20.04.94 Patentblatt 94/16**

(84) Benannte Vertragsstaaten:
**DE ES FR GB IT NL**

(71) Anmelder: **ANT Nachrichtentechnik GmbH**
**Gerberstrasse 33**
**D-71522 Backnang(DE)**

(72) Erfinder: **Ohms, Franz, Dipl.-Ing.**
**Reuteweg 14**
**D-74420 Oberrot(DE)**
Erfinder: **Geiler, Martin, Dipl.-Ing.**
**Hauptstrasse 127**
**D-79215 Elzach(DE)**

(54) **Spannungswandler für den Schaltbetrieb.**

㊙ Spannungswandler (GW) für den Schaltbetrieb sind insbesondere für eine Anlaufphase mit variierenden Einschaltimpulsen betreibbar. Zur Strombegrenzung arbeitet ein solcher Spannungswandler (GW) mit einer sehr hohen Schaltfrequenz.

Für den Übergang auf die niedrige Nominalbetriebsfrequenz sind Mittel (FV) vorgesehen zur Begrenzung des Induktionshubes während der Übergangsphase.

Der Spannungswandler (GW) nach der Erfindung kann als Gegentakt-Gleichspannungswandler mit einem Vorregler (VR) ausgestaltet sein. Die Mittel (FV) zur Induktionshubbegrenzung können als Frequenzvervielfacher oder -teiler aufgebaut sein.

Fig. 6

**EP 0 592 889 A2**

Rank Xerox (UK) Business Services
(3.10/3.09/3.3.4)

Die Erfindung geht aus von einem Spannungswandler gemäß dem Oberbegriff des Patentanspruchs 1. Ein solcher Spannungswandler ist aus der EP 407 691 A1 bekannt.

Spannungswandler werden insbesondere in der Anlaufphase, in der kapazitive Bauelemente geladen werden müssen, im "Strombegrenzermode" betrieben, d.h. durch eine Steuer- oder Regeleinrichtung wird sichergestellt, daß kein zu hoher Energieaufnahmestrom fließt. Bei der EP 0 407 691 A1 bzw. US 5,095,416 kann der Eingangsstrom (Energieaufnahmestrom) des Spannungswandlers insbesondere während einer Anlaufphase, in der kapazitive Elemente zu laden sind, begrenzt werden. Hierzu wird der Eingangsstrom des als Gegentaktgleichspannungswandler ausgebildeten Spannungswandlers in den beiden Gegentaktzweigen pro Schaltzyklus gemessen und aufintegriert. Aus dem aufintegrierten Signal wird ein Steuersignal für einen Pulsfrequenzmodulator abgeleitet, der die Einschaltzeiten der Gegentaktschalter des Spannungswandlers bestimmt. In Abhängigkeit des erfaßten Eingangsstromes werden somit die Einschaltzeiten der Gegentaktschalter nachgeregelt und zwar so, daß der arithmetische Mittelwert des Gegentaktwandlerstromes konstant bleibt.

Wenn nach einer Anlaufphase oder einem sonstigen nicht regulären Betriebszustand des Spannungswandlers der Normalbetrieb, z.B. Betrieb der Schaltglieder des Gegentaktwandlers mit konstanten Einschaltpulse, aufgenommen werden soll, kann es zu Störungen oder Übergangsproblemen kommen.

Aus der DE 38 00 511 C1 ist ein Verfahren zum Erzeugen von Steuerimpulsen für das Stellglied in einem Gleichspannungswandler bekannt. Für den Übergang zwischen zwei Betriebsarten - freilaufender Betrieb/Synchronbetrieb - werden Maßnahmen getroffen, um den Frequenzunterschied zwischen Nennfrequenz und Synchronfrequenz für die Ansteuerung des Stellgliedes beim Betriebsartenwechsel klein zu halten, damit nur kleine Schaltströme fließen und der Gleichspannungswandler nicht überdimensioniert werden muß.

Aufgabe vorliegender Erfindung ist es den Übergang während der Umschaltphase problemlos vorzunehmen. Diese Aufgabe wird durch die Maßnahmen des Anspruchs 1 gelöst. Die weiteren Ansprüche zeigen vorteilhafte Ausgestaltungen auf.

Die Erfindung beruht auf der Erkenntnis, daß insbesondere während der Anlaufphase des Spannungswandlers, wenn kapazitive Elemente geladen werden müssen, ein höherer Strom fließen kann als im Normalbetrieb. Wenn nun in einer solchen Anlaufphase der Strom über die Länge der Einschaltimpulse der Schaltglieder des Spannungswandlers geregelt oder gesteuert wird, ist die Schaltfrequenz höher als im Normalbetrieb. Um nun auf diese tiefere Schaltfrequenz bei Normalbetrieb umschalten zu können, wird erfindungsgemäß der Induktionshub im Transformator des Spannungswandlers während der Umschaltung durch geeignete Mittel dadurch begrenzt, daß während der Umschaltung der Spannungswandler mit einer Schaltfrequenz betrieben wird, die zwischen den Frequenzen liegt, zwischen denen die Umschaltung erfolgt. Mit dieser Maßnahme ist gewährleistet, daß der Transformator des Spannungswandlers und/oder sonstige induktive Beschaltungselemente des Spannungswandlers beim Umschalten der Betriebsfrequenz nicht schlagartig quasi unipolar im Induktionshub ausgefahren werden. Besonders vorteilhaft ist es diese Mittel zur Begrenzung des Induktionshubes in Form eines Frequenzvervielfachers oder -teilers aufzubauen. Damit läßt sich der Induktionshub beispielsweise auf die Hälfte reduzieren und in einer Übergangszeit wieder symmetrieren. Vorteilhaft ist es die Mittel-Frequenzteiler/Frequenzvervielfacher - genau dann einzuschalten, wenn der Induktionshub gerade einen Minimalwert annimmt. Dies kann durch eine geeignete Phasenvergleichsstufe gewährleistet werden. Die Erfindung eignet sich insbesondere für den Betrieb eines Gleichspannungswandlers mit Vorregler, bei dem in der Anlaufphase der Gleichspannungswandler im Strombegrenzungsmode mit Pulsfrequenzmodulation arbeitet. Nach Ablauf dieser Anlaufphase wird der Gleichspannungswandler mit konstanten Einschalt- und Ausschaltpulsen betrieben und nur noch der Vorregler ist für die Regelung von Signalschwankungen zuständig.

Anhand der Zeichnungen werden nun Ausführungsbeispiele der Erfindung näher erläutert.

Es zeigen

Fig. 1 den Induktionshub bei direktem Umschalten auf Nominalfrequenz,

Fig. 2 den Induktionshub bei erfindungsgemäßen Umschalten auf Nominalfrequenz,

Fig. 3 einen Gegentakt-Gleichspannungswandler,

Fig. 4 die Betriebsabschnitte des Gleichspannungswandlers,

Fig. 5 Ansteuerimpulse für den Gleichspannungswandler,

Fig. 6 einen Stromlaufplan des Gleichspannungswandlers mit Vorregler,

Fig. 7 Signale für den Phasenvergleich,

Fig. 8 ein Ersatzschaltbild des Gleichspannungswandlers,

Fig. 9 den Spannungswandlerstrom für eine erste Teilphase,

Fig. 10 den Spannungswandlerstrom für eine weitere Teilphase und

Fig. 11 eine alternative Ausführungsform der Steuerung des Spannungswandlers.

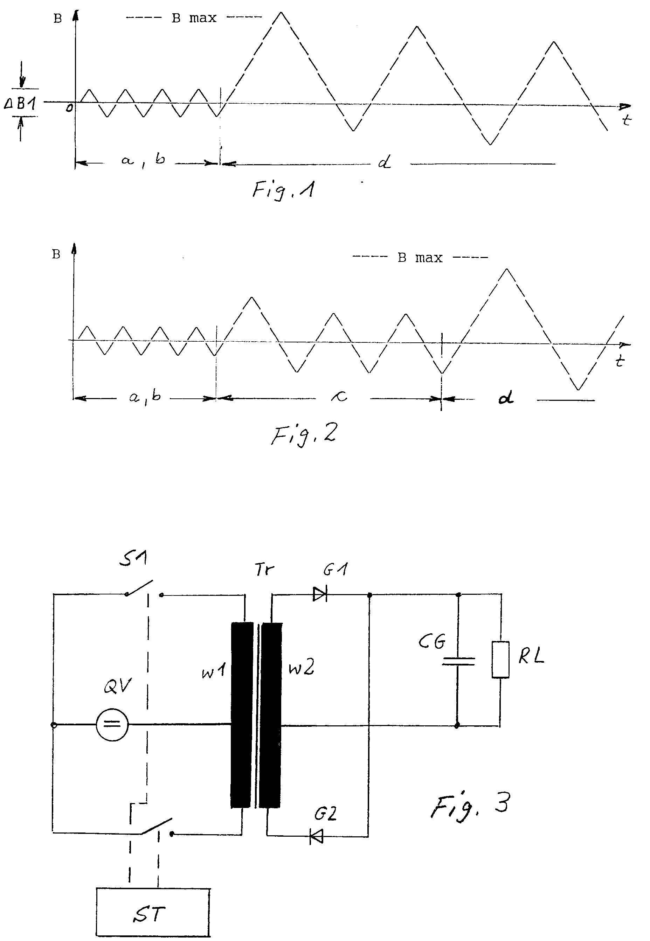

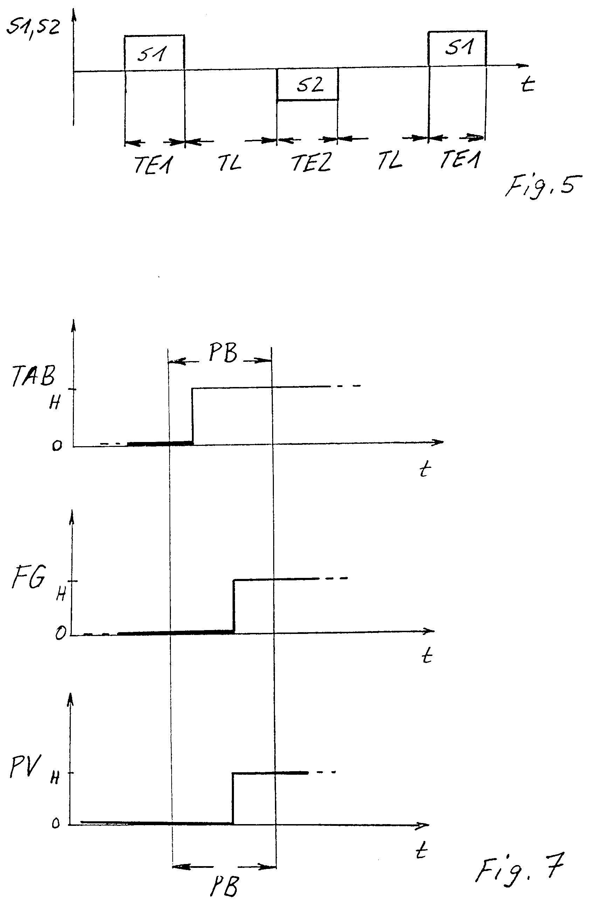

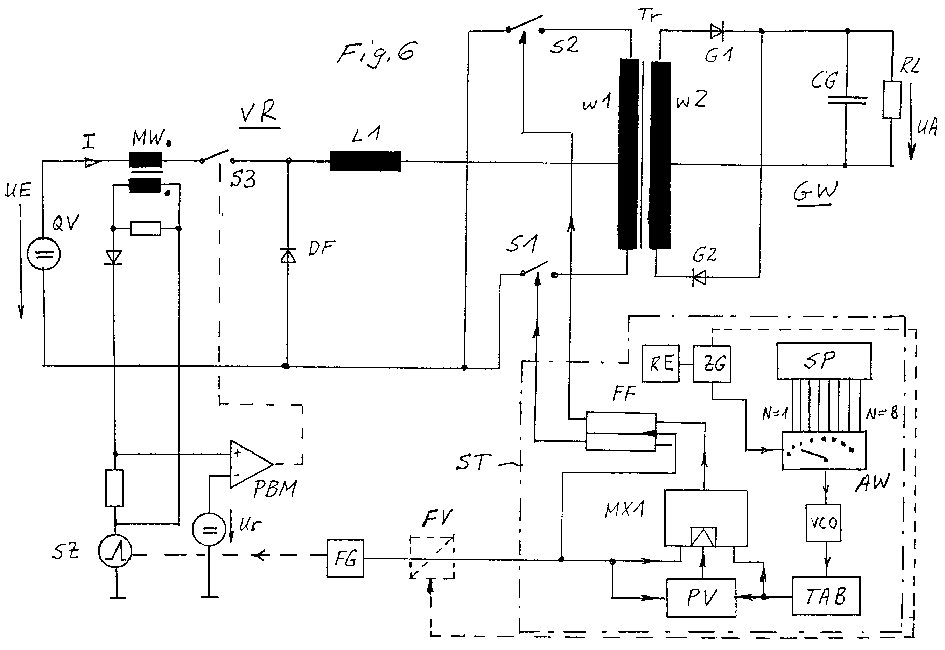

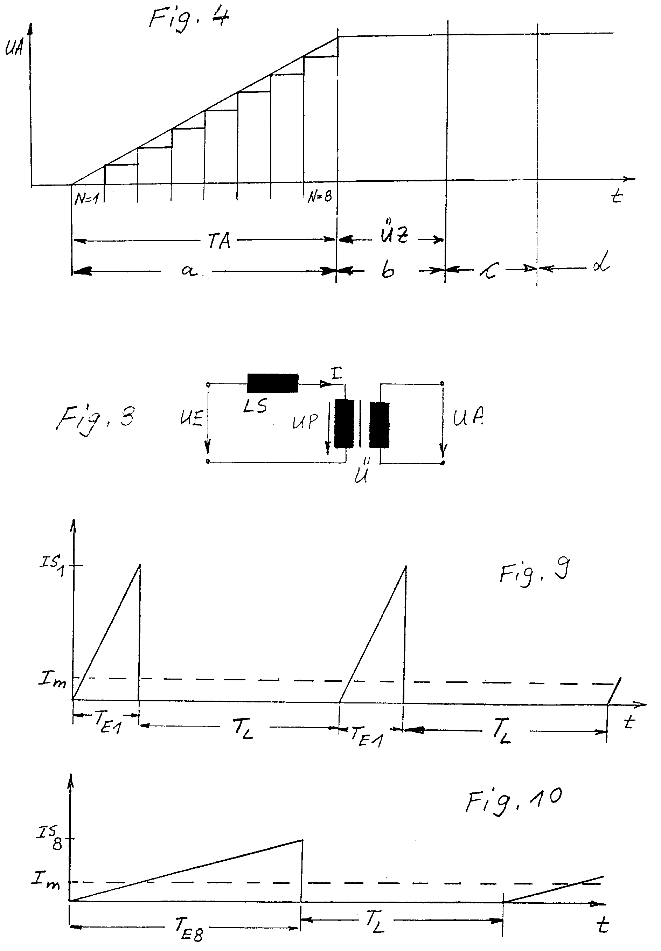

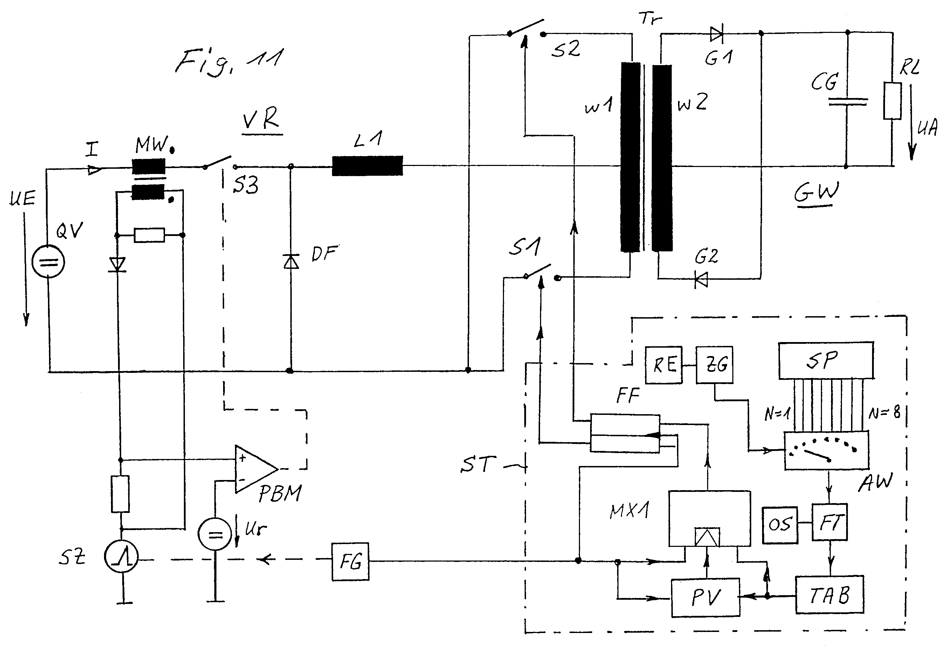

Ein Gleichspannungswandler, welcher gemäß Fig. 3 als Gegentakt-Gleichspannungswandler GW mit den Gegentaktschaltern S1 und S2, dem Transformator Tr, sekundärseitigen Gleichrichtern G1 und G2 in Zweiweg-Schaltung, einem Glättungskondensator und einer Last RL aufgebaut ist, ist über seine Steuerung ST in einem weiten Schaltfrequenzbereich, z.B. 5 kHz - 45 kHz einstellbar. Während einer Anlaufphase a (Fig. 4) nach Zuschalten der Eingangsgleichspannungsquelle QV arbeitet der Gleichspannungswandler GW im Strombegrenzermode; es fließt bedingt durch die Aufladung kapazitiver Elemente ein hoher Ladestrom. Die Steuerung ST, die zeitvariable Einschaltimpulse während der Einschaltzeiten $T_{E1,2}$ mit einer konstanten Lückzeit $T_L$ (Fig. 5) liefert, arbeitet mit der höchsten Schaltfrequenz:

$$fs = \frac{1}{2 \cdot T_{E1,2} + 2\, T_L} \qquad ,$$

die größer als 45 kHz ist. Diese hohe Schaltfrequenz bedingt einen kleinen Induktionshub B1 in Fig. 1. Nach einem "Softtracking" während eines Betriebsabschnittes b, nach dessen Ablauf die Anlaufphase beendet ist, soll auf eine niedrige Nominalbetriebsfrequenz von 5 kHz - 20 kHz umgeschaltet werden.

Wenn, wie Fig. 1 zeigt, ein direktes Umschalten auf diese Nominalbetriebsfrequenz vorgenommen wird, ergibt sich ein großer Induktionshub, der den Schwellwert $B_{max}$ übersteigt. Bei der erfindungsgemäßen Lösung gemäß Fig. 2 wird nicht direkt auf die niedrige Nominalbetriebsfrequenz umgeschaltet, sondern es wird in einem Betriebsabschnitt c die Schaltfrequenz gegenüber der Nominalbetriebsfrequenz verdoppelt auf 10 kHz - 40 kHz. Dadurch reduziert sich der Induktionshub auf die Hälfte und symmetriert sich in den 2 ms des Betriebsabschnittes c wieder. Die dann erfolgende Umschaltung auf Nominalbetriebsfrequenz im Abschnitt d zeigt, daß bei dieser Vorgehensweise der Schwellwert $B_{max}$ für den Induktionshub an keiner Stelle überschritten wird. Zu beachten ist, daß der Induktionshub auch dadurch begrenzt werden kann, daß der Umschaltzeitpunkt gerade so gelegt wird, daß dort der Induktionshub einen Minimalwert annimmt (Fig. 1 und 2).

Anhand der nachfolgenden Ausführungsbeispiele werden Einzelheiten und Schaltungsausführungen noch näher erläutert.

Die Gegentaktschalter S1 und S2 arbeiten auf die Primärwicklung w1 (Verbindung jeweils mit den Wicklungsenden) des Transformators Tr. Die Sekundärwicklung w2 arbeitet zusammen mit den Gleichrichtern G1 und G2 als Zweiweg-Gleichrichterschaltung mit dem Glättungskondensator CG und der Last RL. Die Mittelanzapfung der Primärwicklung w1 des Transformators Tr ist über einen Vorregler VR - hier beispielsweise als Buckregler aufgebaut mit dem Schaltglied S3, der Induktivität L1 und der Freilaufdiode DF - an die Versorgungsspannungsquelle QV angeschlossen. Über die Steuereinrichtung ST ist der Spannungswandler GW so betreibbar, daß die Schaltfrequenz für die Gegentaktschalter S1 und S2 insbesondere in der Anlaufphase in Abhängigkeit des Energieaufnahmestromes variiert und zwar so, daß der Energieaufnahmestrom nahezu konstant ist und einen vorgegebenen Grenzwert nicht übersteigt. Dieses Verhalten läßt sich durch eine übliche Stromregelung oder, besonders vorteilhaft, durch eine Steuerung erreichen.

In der Anlaufphase arbeitet der Spannungswandler im Strombegrenzermode demzufolge ist diese Schaltfrequenz fs höher als die Schaltfrequenz z.B. 45 kHz des Vorreglers VR, die durch den Taktgeber FG vorgegeben wird. Arbeitet der Vorregler VR, wie in Fig. 6 dargestellt, mit Pulsbreitenmodulation - Steuerung des Schalters S3 über einen Pulsbreitenmodulator PBM, der den Energieaufnahmestrom I über einen Meßwandler MW auswertet zusammen mit einem Sägezahlsignal SZ, dessen Wiederholfrequenz vom Taktgeber FG bestimmt wird, und einer Referenzspannung Ur - ist der Taktgeber FG ein Festtaktgeber. Um die Schaltsignale des Spannungswandlers GW mit denen des Vorreglers VR zu synchronisieren, ist eine Phasenvergleichsstufe PV vorgesehen, die bei Übereinstimmung des Ausgangssignals des Festtaktgebers FG (Schaltfrequenz für den Vorregler VR) mit dem Schaltsignal für den Spannungswandler (Schaltfrequenz fs) innerhalb des vorgegebenen Phasentoleranzbereiches PB (Fig. 7) eine Umschaltung des Spannungswandlers GW auf einen Schaltbetrieb mit konstanter Frequenz - hier vorteilhafterweise die vom Festtaktgeber FG abgegebene Frequenz umschaltet. Die Schaltfrequenz des Spannungswandlers während des Strombegrenzermodes wird über eine Taktaufbereitungsstufe TAB abgeleitet, deren Ausgangssignal in der ersten Zeile von Fig. 7 dargestellt ist; in der zweiten Zeile ist das Ausgangssignal des Festtaktgebers FG und in der dritten Zeile das Ausgangssignal der Phasenvergleichsstufe PV dargestellt. Wenn die beiden Signale von Taktaufbereitungsstufe TAB und Festtaktgeber FG im Phasentoleranzbereich PB von z.B. 0 bis 3 μsec bezüglich ihrer Anstiegsflanken liegen, erscheint am Ausgang der Phasenvergleichsstufe PV ein Schaltsignal H, welches einen Multiplexer MX1 steuert und anstelle des Ausgangssignals der Taktaufbereitungsstufe TAB das Ausgangssignal des Festtaktgeber FG für die Aufbereitung der Gegentaktimpulse der Schalter S1 und S2 über das Flip-Flop FF bereitstellt. Ist der Spannungswandler GW als Eintaktwandler aufgebaut kann auf das Flip-Flop FF natürlich verzichtet werden. Bei Ausbildung des Spannungswandlers als Brückenwandler muß natürlich eine entsprechende Aufbereitung der Ansteuerimpulse erfolgen. Die Lückzeit $T_L$ wird fest vorgegeben, z.B. gemäß EP 77 958 B1. Die Bildung der Lückzeit kann bereits in die Taktaufbereitungsstufe TAB erfolgen oder nach dem Multiplexer MX1. Diese Variante hat den Vorteil, daß der Festtaktgeber FG keine besonderen Einrichtungen zur Bildung der Lückzeit aufweisen muß.

Fig. 4 zeigt drei verschiedene Abschnitte für den Betrieb des Spannungswandlers. Im Abschnitt a - Einschaltmode - steigt die Ausgangsspannung UA des Spannungswandlers unter der Wirkung der spannungswandlereigenen Induktivität und/oder einer Beschaltungsinduktivität rampenhaft an (bei konstantem Energieaufnahmestrom). Die Induktivität ist bei einem Gegentaktgleichspannungswandler im wesentlichen durch die Streuinduktivität LS seines Transformators Tr gegeben. Für das Ersatzschaltbild (Fig. 8) gelten folgende Beziehungen:

$$UA/UP = \ddot{U} \text{ und}$$
$$UP = LS \cdot \frac{dI}{dt} .$$

Die kapazitiven Beschaltungselemente des Gleichspannungswandlers sind hier symbolisch im Glättungskondensator CG zusammengefaßt. Die Streuinduktivität LS wird hier zur Begrenzung des Stromanstiegs dI/dt benutzt. Die Stromanstiegszeit TA (Fig. 4), d.h. die Zeitphase während der die Ausgangsspannung UA des Spannungswandlers infolge der Wirkung der Streuinduktivität LS linear ansteigt, wird nun in z.B. N = 8 gleiche Teilphasen - Zeitintervalle - unterteilt. Die Rampenspannung beim Anstieg wird nun durch eine Treppenfunktion mit N = 8 Stufen angenähert. Mit dieser Annäherung und der Streuinduktivität LS als wirksamer Induktivität können nun die einzelnen Einschaltzeiten innerhalb der entsprechenden 8 Zeitintervalle so gewählt werden, daß der arithmetische Mittelwert des Stromes I nahezu konstant bleibt und damit der Einschaltstrom nicht höher wird als ein vorgegebener Nennstrom. Im ersten der 8 Zeitintervalle fällt die gesamte treibende Spannung an der Streuinduktivität LS ab.

Für den Spitzenwert IS des Stromes I gilt:

$$IS = \frac{UP}{LS} \cdot T_{E1} ,$$

wobei $T_{E1}$ die Einschaltzeit des Spannungswandlers in der ersten der n-Teilphasen ist.

Der arithmetische Mittelwert $I_m$ des Stromes I pro Schaltzyklus ergibt sich zu:

$$Im = \frac{(IS/2) \cdot T_{E1}}{T_{E1} + T_L} ,$$

Mit der Beziehung für IP ergibt sich dann:

$$T_{E1} = \frac{I_m}{UP} \cdot LS \left( 1 + \sqrt{1 + \frac{2 \, T_L \cdot UP}{I_m \cdot LS}} \right)$$

Mit den Werten $I_m$ = 6A, UP = 50V, LS = 1$\mu$H, $T_L$ = 3$\mu$s ergibt sich $T_{E1}$ = 0,97 $\mu$s.

In Fig. 9 ist der Gleichspannungswandlerstrom I für diese erste Teilphase dargestellt.

In der zweiten Teilphase fällt nur noch 7/8 der treibenden Spannung an der Streuinduktivität ab. Für die dritte Teilphase entsprechend 6/8 usw.

Für die n-te Teilphase, n = 1,2,3,...N, gilt:

4

$$T_{En} = \frac{I_m \cdot LS}{UP \left(\dfrac{N-n+1}{N}\right)} \left(1 + \sqrt{1 + \frac{2\ T_L \cdot UP}{I_m \cdot LS} \cdot \frac{N-n+1}{N}}\ \right)$$

mit $T_{En}$ = Einschaltzeit des Spannungswandlers in der n-ten Teilphase,

N = Anzahl der Teilphasen, z.B. N = 8.

Für n gilt: n $\epsilon$ $N$ und n $\leq$ N.

Beispielsweise erhält man mit obigen Werten $T_{E8}$ = 3,5 $\mu$s. In Fig. 10 ist der Stromverlauf für diese Teilphase N = 8 dargestellt.

Die Zeitdauer der Rampe, d.h. die Zeitphase während der die Ausgangsspannung des Spannungswandlers infolge der Induktivität (hier die Streuinduktivität des Transformators) zunimmt, ist abhängig von den ausgangsseitigen kapazitiven Beschaltungselementen, einem eventuellen kapazitiven Anteil der Last, sowie von dem arithmetischen Mittelwert des Stromes, der zulässig sein soll. Für die Anstiegszeit TA (Fig. 4 im Abschnitt a) gilt demnach

$$TA \sim \frac{CG \cdot UA}{I_m} \quad ,$$

wobei in CG alle ausgangsseitigen kapazitiven Anteile vereinigt sein sollen. Die Zahl N der zu wählenden Zeitintervalle (Teilphasen) ist davon abhängig wie genau die Annäherung der Treppenfunktion an die Rampe (Fig. 4) sein soll. Für eine typische Hochspannungsstromversorgung eines Wanderfeldröhrenverstärkers sind N = 8 Zeitintervalle ausreichend. Mit TA $\simeq$ 8ms und N = 8 ergibt sich eine Intervallzeit einer Teilphase zu 1 ms.

Die Signalaufbereitung in der Taktaufbereitungsstufe TAB kann in volldigitaler Realisierung aus einer Verknüpfungslogik bestehen, die aus einem Takt von beispielsweise 5 MHz die entsprechenden Verknüpfungen während der Anstiegszeit TA, die zuvor z.B. in einem Testbetrieb ermittelt wird, vornimmt. Jede Millisekunde wird, beispielsweise gesteuert über einen Taktzähler, die Einschaltzeit $T_{En}$ auf einen wie zuvor berechneten höheren Wert eingestellt.

Wie Fig. 6 zeigt, können die Kennwerte für die z.B. N = 8 verschiedenen Einschaltzeiten für die unterschiedlichen Teilphasen in einem Speicher SP zuvor abgelegt werden und über eine Auswahlschaltung AW an den frequenzbestimmenden Eingang eines frequenzsteuerbaren Oszillators VCO weitergeleitet werden. Die Auswahlschaltung AW ist von einem Zeitgeber ZG gesteuert, der nach jeweils einer Millisekunde einen der 8 Kennwerte an den Oszillator VCO weiterschaltet und so die zuvor abgeleiteten Einschaltzeiten für die Schalter S1 und S2 bestimmt. Zur Aufbereitung der Gegentaktimpulse ist dem Oszillator VCO ein Flip-Flop FF nachgeschaltet. Am Ende eines Anstiegs der Ausgangsspannung UA (Fig. 4) wird der Zeitgeber ZG über eine Rücksetzeinrichtung RE und damit auch die Auswahlschaltung AW zurückgesetzt, um für einen erneuten Anstieg der Ausgangsspannung UA wiederum verschiedene Einschaltzeiten $T_{En}$ bereitzustellen.

Alternativ zur Realisierung gemäß Fig. 6 kann der Oszillator auch als Festfrequenzoszillator OS aufgebaut sein (Fig. 11) mit einem nachgeschalteten Frequenzteiler FT, dessen Teilerverhältnis einstellbar ist. Über die Auswahlschaltung AW wird dann für jeden Kennwert ein anderes Teilerverhältnis eingestellt.

Der Abschnitt b in Fig. 4 stellt den sogenannten "Softtracking-Mode" dar, in welchem, wie zuvor beschrieben, der Phasenvergleich und die Umschaltung auf die Schaltfrequenz bei Normalbetrieb vorgenommen wird. Insgesamt ist hierfür die Übergangszeit ÜZ vorgesehen. Alternativ zur Umschaltung mittels Multiplexer MX1 kann auch der frequenzsteuerbare Oszillator VCO über das Ausgangssignal der Phasenvergleichsstufe PV in seiner Phasenlage beispielsweise über eine PLL nachgeführt werden.

Der Abschnitt d in Fig. 4 steht für den Normalbetriebsfall.

Damit bei einem Übergang von der hohen variierenden Schaltfrequenz auf die niedrige feste Schaltfrequenz des Normalmodes der Induktionshub des Gleichspannungswandlers GW nicht schlagartig ansteigt, sind Mittel FV zur Begrenzung des Induktionshubes im Übergangsbereich Abschnitt c vorgesehen. Im einfachsten Fall können diese Mittel FV (in Fig. 6 gestrichelt eingezeichnet) aus einer Frequenzvervielfacher - bzw. einer Frequenzteilerstufe bestehen. Beim Ausführungsbeispiel gemäß Fig. 6 genügt es die Ausgangsfrequenz des Taktgebers FG für die Übergangszeit vom z.B. 2 ms des Abschnittes c zu verdoppeln, bevor auf die niedrige Nominalbetriebsfrequenz (Frequenz des Taktgebers FG) umgeschaltet wird. Dieser Frequenzverdoppler FV wird vorzugsweise in seiner Einschaltzeit ebenfalls vom Zeitgeber ZG gesteuert.

**Patentansprüche**

1. Spannungswandler (GW) für den Schaltbetrieb mit einem Transformator (Tr) und einer Steuereinrichtung (ST), die eine Umschaltung der Schaltfrequenz des Spannungswandlers (GW) ermöglicht, dadurch gekennzeichnet, daß Mittel (FV) vorgesehen sind, die den Spannungswandler (GW) zur Begrenzung des Induktionshubes im Transformator (Tr) während der Umschaltung vorübergehend mit einer Schaltfrequenz betreiben, die zwischen den Frequenzen liegt, zwischen denen die Umschaltung erfolgt.

2. Spannungswandler nach Anspruch 1, dadurch gekennzeichnet, daß die Mittel (FV) aus einer Frequenzvervielfacher-, insbesondere einer Frequenzverdopplerstufe, bestehen.

3. Spannungswandler nach Anspruch 1 oder 2, dadurch gekennzeichnet, daß die Mittel (FV) über die Steuereinrichtung (ST) nach einer Anlaufphase des Spannungswandlers (GW) aktivierbar sind.

4. Spannungswandler nach einem der Ansprüche 1 bis 3, dadurch gekennzeichnet, daß die Mittel (FV) so ausgebildet sind, daß sie bei einem Übergang von einer hohen variablen Schaltfrequenz auf eine niedrigere feste Schaltfrequenz als Frequenzverdoppler arbeiten.

5. Spannungswandler nach einem der Ansprüche 1 bis 4, dadurch gekennzeichnet, daß die Mittel (FV) zu einem Zeitpunkt aktivierbar bzw. desaktivierbar sind für den der Induktionshub gerade einen Minimalwert annnimmt.

6. Spannungswandler nach einem der Ansprüche 1 bis 5, gekennzeichnet durch die Ausbildung als Gegentaktgleichspannungswandler, welcher über einen Schaltregler als Vorregler (VR) an eine Gleichspannungsversorgungsquelle (QV) angeschlossen ist.

7. Spannungswandler nach einem der Ansprüche 1 bis 6, dadurch gekennzeichnet, daß Mittel (SP, AW, OS, VCO) vorgesehen sind zur Aufbereitung der Einschaltimpulse für den Spannungswandler in mehreren Teilphasen derart, daß die Einschaltimpulse innerhalb einer Teilphase gleichlang und bezüglich unterschiedlicher Teilphasen unterschiedlich lang gewählt werden und daß die Länge der Einschaltimpulse so gewählt ist, daß der Energieaufnahmestrom des Spannungswandlers konstant ist.

8. Spannungswandler nach einem der Ansprüche 6 oder 7, dadurch gekennzeichnet, daß eine Phasenvergleichsstufe (PV) vorgesehen ist, über die bei Übereinstimmung eines Schaltsignals des Vorreglers (VR) mit einem Schaltsignal des Spannungswandlers (GW) innerhalb eines vorgesehenen Phasentoleranzbereichs (PB) eine/die Umschaltung des Spannungswandlers (GW) auf einen Schaltbetrieb mit konstanter Schaltfrequenz erfolgt.

6

Fig. 1

Fig. 2

Fig. 3

S1,S2

S1

S2

S1

t

TE1    TL    TE2    TL    TE1

Fig. 5

TAB

H

0

PB

t

FG

H

0

t

PV

H

0

t

PB

Fig. 7

8

Fig.6

VR

GW

EP 0 592 889 A2

Fig. 4

UA

N=1    N=8    t

TA    üz

a    b    c    d

Fig. 8

UE    LS    I    UP    UA    Ü

Fig. 9

$IS_1$

$I_m$

$T_{E1}$    $T_L$    $T_{E1}$    $T_L$    t

Fig. 10

$IS_8$

$I_m$

$T_{E8}$    $T_L$    t

10

Fig. 11

EP 0 592 889 A2